# EUROPEAN PATENT SPECIFICATION

(11) **EP 1 905 680 B1**
(45) Date of publication and mention of the grant of the patent: **08.04.2009**
(21) Application number: 07015220.2
(22) Date of filing: 02.08.2007
(51) Int. Cl.: B62J 27/00, B60R 21/233

(54) **Airbag system for motorcycle**
Airbagsystem für ein Motorrad
Dispositif d'airbag pour motocyclette

(30) Priority: 29.09.2006 JP 2006269331
(43) Date of publication of application: 02.04.2008
(73) Proprietor: HONDA MOTOR CO., LTD., Tokyo 107-8556 (JP)
(72) Inventor: Kato, Yuichi, Wako-shi Saitama 351-0193 (JP); Goto, Hiroshi, Wako-shi Saitama 351-0193 (JP); Kuroe, Takeshi, Wako-shi Saitama 351-0193 (JP)
(74) Representative: Liska, Horst

(56) References cited:
- EP-A- 1 342 653
- FR-A- 2 761 940
- JP-A- 2002 137 779
- YAMAGUCHI J: "MOTORCYCLE INCORPORATES AIRBAG SYSTEM" AUTOMOTIVE ENGINEERING INTERNATIONAL, SAE INTERNATIONAL, WARRENDALE, PA, US, vol. 108, no. 6, June 2000 (2000-06), page 46, XP000936277 ISSN: 1543-849X

## Description

### Technical Field

The present invention relates to an airbag system for a motorcycle, and particularly to an airbag system for a motorcycle in which predetermined components are ruptured as planned so as to prevent unpredictable deformation of exterior components.

### Background Art

There have been studied from the past various devices for applying to a motorcycle an airbag by which a rider is effectively restrained when an impact exceeding a predetermined value is applied to a vehicle body. One point where motorcycles largely differ from four-wheeled vehicles is that a rider is not restrained by a vehicle body through a seat beat or the like. In response to this fact, there is known a method in which one end of a support belt whose other end is fixed to a vehicle body is coupled to an airbag, and at the time of swelling and expansion of the airbag, the airbag is supported so as to be pulled from the rear side of the vehicle body.

JP-A No. 2003-327182 discloses an airbag system in which support belts for airbag are accommodated in a pair of left and right accommodation grooves passing through leg shields, footrest parts, and a rear cover, from a front cover in a scooter-type motorcycle. According to the airbag system, since the support belts support the airbag, it is possible to effectively restrain a rider even when the yawing behavior and the rolling behavior of a vehicle body are large.

### Problem to be Solved by the Invention

Unlike a four-wheeled vehicle in which exterior components cover around a driver and passengers, it is preferable for a motorcycle, in which a rider is brought in direct contact with exterior components, to be configured not to generate deformation of the exterior components in the vicinity of the rider due to an impact applied to a vehicle body. However, a force generated by an impact applied to the vehicle body is likely to be concentrated in the shape such as the accommodation grooves for the support belts. Thus, it is conceivable that, when the accommodation grooves are arranged in the vicinity of a rider, exterior components in the vicinity of the rider are likely to be deformed. JP-A No. 2003-327182 provides no disclosures and suggestions in response to such a problem.

An object of the present invention is to address the above-described problem of the related art, and to provide an airbag system for a motorcycle in which predetermined components are ruptured as planned so as to prevent unpredictable deformation of exterior components.

### Means for Solving the problem

In order to achieve the above-described object, the first aspect of the present invention is an airbag system for a motorcycle, including accommodation parts in which support belts for coupling an airbag to a vehicle body are accommodated and covers which cover above the accommodation parts, the system including: a top shelter center made of resin, as an exterior component, which is arranged on the rear side of a vehicle body while being adjacent to an airbag module in which the airbag is accommodated; and top shelters made of resin, as a pair of left and right exterior components, which are engaged with the top shelter center outside in the vehicle-width direction, wherein each of the accommodation parts is configured by an overhanging part of the top shelter center which is overhung outside in the vehicle-width direction and an extension part of the top shelter which extends inside in the vehicle-width direction, the overhanging parts are engaged with the extension parts through engaging portions inside the accommodation parts, and notches formed along the front-rear direction of the vehicle body are provided in the extension parts outside in the vehicle-width direction relative to the engaging portions.

The second aspect of the present invention is the airbag system for a motorcycle, wherein: the covers are configured to be removed from the accommodation parts along with swelling and expansion of the airbag; plates having wire holding parts to which wires connected to the covers are coupled are provided; openings where the wire holding parts face outside in the vehicle-width direction are formed in the extension parts of the top shelters; and each of the notches is formed at a lateral end of the corresponding extension part on the rear side of the vehicle body and a lateral end of the corresponding opening on the front side of the vehicle body.

### Effect of the Invention

According to the invention: a top shelter center made of resin, as an exterior component, which is arranged on the rear side of a vehicle body while being adjacent to an airbag module in which the airbag is accommodated, and top shelters made of resin, as a pair of left and right exterior components, which are engaged with the top shelter center outside in the vehicle-width direction are provided; each of the accommodation parts is configured by an overhanging part of the top shelter center which is overhung outside in the vehicle-width direction and an extension part of the top shelter which extends inside in the vehicle-width direction; the overhanging parts are engaged with the extension parts through engaging portions inside the accommodation parts; and notches formed along the front-rear direction of the vehicle body are provided in the extension parts outside in the vehicle-width direction relative to the engaging portions. Accordingly, even when a force caused by an impact applied to the vehicle body is transmitted to the top shelters, such a force is concentrated at the notches, thereby preferentially separating the top shelters and the top shelter center. Accordingly, a force caused by an impact is allowed to escape to the rupture portions, and it is possible to prevent the deformation of exterior components, which is difficult to predict.

According to the second aspect of the invention: the covers are configured to be removed from the accommodation parts along with swelling and expansion of the airbag; plates having wire holding parts to which wires connected to the covers are coupled are provided; openings where the wire holding parts face outside in the vehicle-width direction are formed in the extension parts of the top shelters; and each of the notches is formed at a lateral end of the corresponding extension part on the rear side of the vehicle body and a lateral end of the corresponding opening on the front side of the vehicle body. As compared to a configuration in which the notches are provided at both ends of the extension part in the front-rear direction of the vehicle body, a length necessary for rupture can be shortened, and target rupture can be certainly performed with a simple notch shape.

### Brief Description of the Drawings

Fig. 1 is a side view of a motorcycle according to an embodiment of the present invention.
Fig. 2 is a partial top view of the motorcycle according to the embodiment of the present invention.
Fig. 3 is a partially enlarged view of Fig. 2.
Fig. 4 is a top view showing a coupling structure of a belt cover according to the embodiment of the present invention.
Fig. 5 is a perspective view of a top shelter center according to the embodiment of the present invention.
Fig. 6 is a top view of a wire coupling plate according to the embodiment of the present invention.
Fig. 7 is an enlarged top view of an extension part of a top shelter.

### Best Mode for Carrying Out the Invention

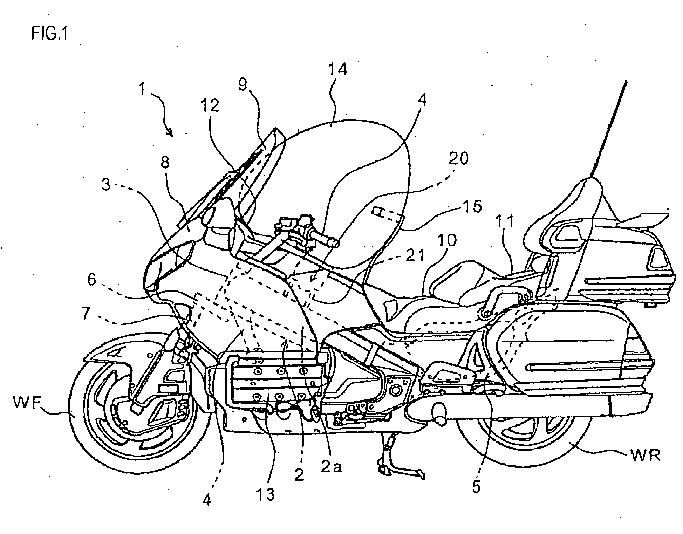

Hereinafter, a preferred embodiment of the present invention will be described in detail with reference to the drawings. Fig. 1 is a side view of a motorcycle in which an airbag system according to the embodiment of the present invention is applied. A frame 2 of a motorcycle 1 is configured mainly by a pair of left and right upper tubes 2a which extend diagonally downward to the rear of a vehicle body from a head pipe 3. A lower tube 4 extends downward from the vicinity of the head pipe 3, and an engine 13, as a driving source, is fixedly suspended from a tip end of the lower tube 4. A pair of left and right front forks 7 which are steerable with a handlebar 4 are axially supported by the head pipe 3 through a lower bracket 6, and a front wheel WF is rotatably journalled to lower ends of the front forks 7. A seat frame 5 for supporting a main seat 10, a rear seat 11 and the like is connected to the frame 2 on the rear side of the vehicle body, and a rear wheel WR, as a driving wheel, is rotatably journalled to a rear end of a swing arm (not shown) which is swingably coupled to the frame 2.

In the motorcycle 1 according to the embodiment, there is provided an airbag 14 which, when an impact exceeding a predetermined value is applied to the vehicle body, swells and expands in a substantially spherical shape having a size ranging from the upper side of the main seat 10 to the vicinity of a wind screen 9 attached to an upper end of an upper cowl 8 while being in contact with a meter panel 12. An airbag module 20 for integrally accommodating therein the airbag 14 and an inflator (not shown) for generating a gas to swell and expand the airbag 14 is fixed to the upper tubes 2a using a support stay 21 at a forward position of the vehicle body relative to a seated position of a rider. Support belts 15 for effectively restraining a rider while keeping the airbag 14 at an appropriate position are coupled to the airbag 14 on the rear side of the vehicle body.

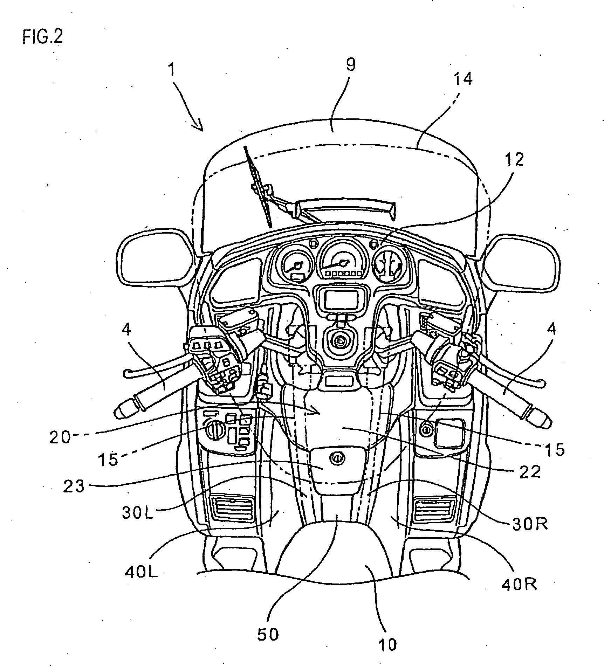

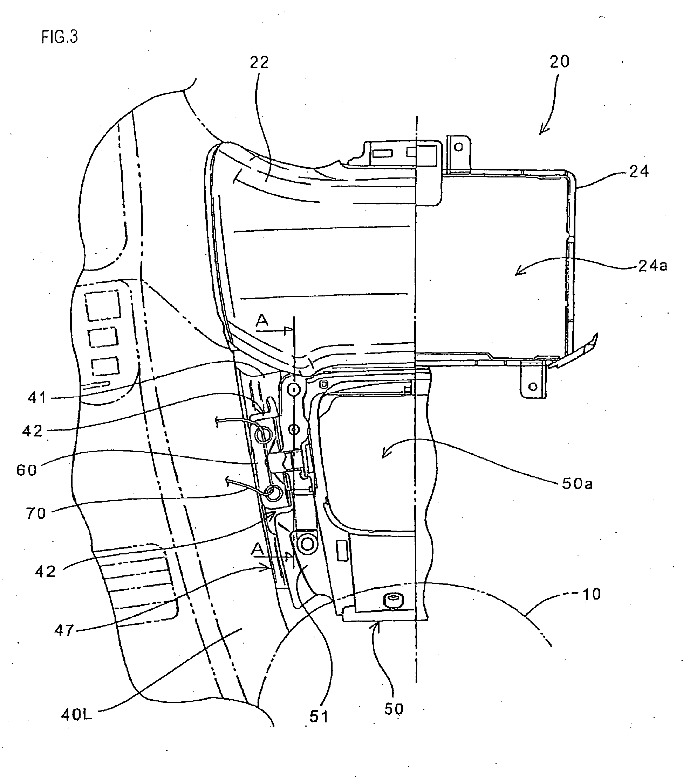

Fig. 2 is a partial top view of the motorcycle according to the embodiment of the present invention. Reference numerals identical to the above denote identical or equivalent parts. The airbag module 20 is configured in such a manner that the inflator and the folded airbag 14 are accommodated in a box-shaped casing (see Fig. 3), and an upper portion thereof is covered with a module cover 22. The airbag module 20 is arranged between lateral ends of the meter panel 12 on the rear side of the vehicle body and a filler lid 23 located above a fuel tank (not shown). When the airbag 14 swells and expands, the airbag module 20 is configured in such a manner that the module cover 22 is allowed to open with one side thereof on the front side of the vehicle body serving as an axis by a gas pressure of the inflator which is instantly supplied to the airbag 14.

The filler lid 23 is openably and closably journalled to a top shelter center 50 as an exterior component. On both sides of the filler lid 23 and the top shelter center 50, there are arranged belt covers 30L and 30R as covers of accommodation parts for the support belts 15. Further outside in the vehicle-width direction, there are arranged top shelters 40L and 40R as exterior components. Along with swelling and expansion of the airbag 14, the support belts 15 are configured to expand up to the illustrated position while forcibly opening the left and right belt covers 30L and 30R. It should be noted that the module cover 22, the belt covers 30L and 30R, the top shelters 40L and 40R, and the top shelter center 50 are made of resin and the like. Lower ends of the support belts 15 are tightly fastened to lateral members of the vehicle body underneath the main seat 10.

It should be noted that the airbag 14 is formed in such a manner that a portion between attachment portions for the support belts 15 on both sides of the airbag 14, that is, a middle portion where a rider is held is formed in a concave shape having a substantially V-shaped cross section, in order to effectively wrap around a rider. Further, the airbag 14 is not only configured to be supported so as to be pulled from the rear by the support belts 15, but also configured to be supported from the front side of the vehicle body by the handlebar 4, the meter panel 12, and the like.

Fig. 3 is partially enlarged view of Fig. 2. The left half of the drawing shows a state where the left-side belt cover 30L is removed from an accommodation part 47 for the support belt 15, and the right half of the drawing shows a state where the module cover 22 of the airbag module 20 is detached. As described above, the airbag module 20 is configured in such a manner that the folded airbag 14 and the inflator (not shown) for swelling and expanding the airbag 14 are accommodated in the box-shaped casing 24 made of metal and the like, and the casing is covered with the module cover 22. When the airbag 14 swells and expands, the module cover 22 opens toward the front of the vehicle body, and the airbag 14 swells and expands from an opening 24a of the casing 24. It should be noted that, in the top shelter center 50 which is arranged on the rear side of the vehicle body while being adjacent to the airbag module 20, there is formed an opening 50a which is covered with the filler lid 23.

The support belts 15 and the accommodation parts 47 for the support belts 15 have a substantially bilaterally-symmetrical shape. Therefore, the explanation thereof will be made using only the left-side ones. The accommodation part 47 is formed by an extension part 41 of the left-side top shelter 40L and an overhanging part 51 of the top shelter center 50. At a substantially middle portion of the accommodation part 47, there is installed a fixation plate 60 to which a wire 70, as a string-shaped member, connected to the left-side belt cover 30L is coupled. The fixation plate 60 is arranged so as to face toward the outside in the vehicle-width direction from an opening formed in the extension part 41 of the left-side top shelter 40L.

Both ends of the wire 70 which pass through through-holes 66 formed in the fixation plate 60 are connected to the left-side belt cover 30L through wire attachment stays (not shown), thereby coupling the left-side belt cover 30L to the accommodation part 47. Therefore, even when the support belt 15 is pulled out and removed from the accommodation part 47 along with swelling and expansion of the airbag 14, the left-side belt cover 30L is not moved away from the accommodation part 47 over a predetermined length of the wire 70, and a removing range is restricted. Thus, it is possible to prevent the left-side belt cover 30L from dropping off from the vehicle body and from flying apart in an unexpected direction.

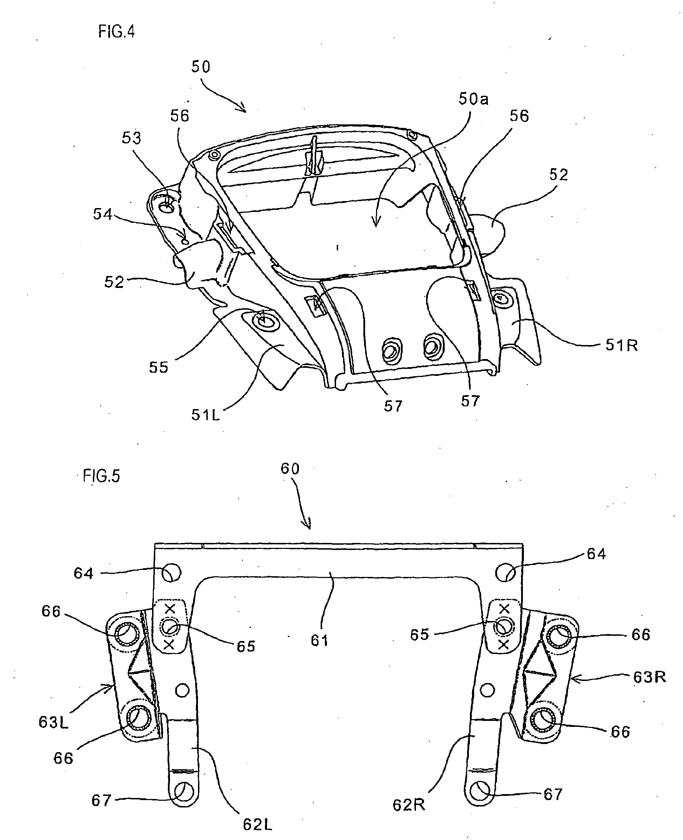

Fig. 4 is a perspective view of the top shelter center 50, and Fig. 5 is a top view of the fixation plate 60. The top shelter center 50 integrally molded by resin and the like has a substantially bilaterally-symmetrical shape. In the top shelter center 50, there are formed: left and right overhanging parts 51 L and 51 R configuring the accommodation parts 47; through-holes 53, 54, and 55 used when the top shelter center 50 is fastened to the fixation plate 60 and the top shelters 40L and 40R; engaging grooves 56 into which stays (not shown) of the belt covers 30L and 30R are inserted; and cylindrical parts 52 adjacent to the engaging grooves 56.

The fixation plate 60 is made of metal as similar to the wire 70 which is made of metal such as stainless steel, and is configured in such a manner that a middle member 61 is connected by welding to outer members 62L and 62R in which wire holding parts 63L and 63R are formed. In addition to through-holes 65 which are formed at coupling portions between the middle member 61 and the outer members 62L and 62R, through-holes 64 and 67 which are used when the fixation plate 60 is fastened to the top shelter center 50 and the left and right top shelters 40L and 40R are formed in the fixation plate 60.

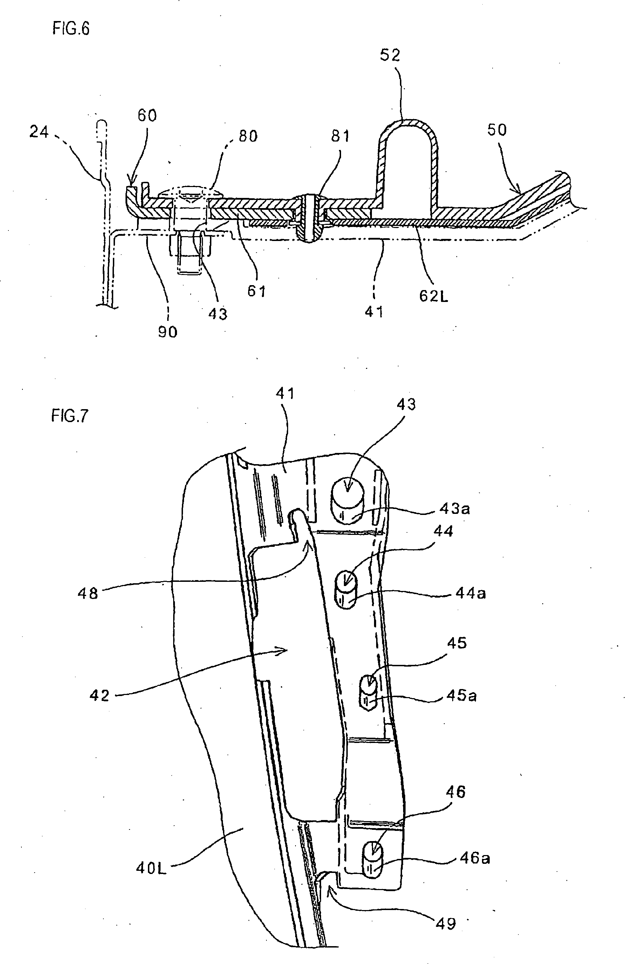

Fig. 6 is a cross sectional view taken along the line A-A of Fig. 3. As illustrated therein, a bolt 80 penetrates the through-hole 53 of the top shelter center 50, the through-hole 64 formed in the middle member 61 of the fixation plate 60, a through-hole 43 formed in the extension part 41 of the left-side top shelter 40, and a stay 90 to be coupled to a plate member of the casing 24 on the rear side of the vehicle body, and then is fastened with a nut or the like. A grommet 81 is configured to penetrate the through-hole 54 of the top shelter center 50 and the through-hole 65 formed at the welding-connection portion of the fixation plate 60 so as to fasten the both. With the configuration as described above, the fixation plate 60 is indirectly coupled to the frame 2 of the motorcycle 1, and is stably supported by the vehicle body.

Fig. 7 is an enlarged top view of the extension part 41 of the left-side top shelter 40L. Through-holes 43, 44, 45, and 46 are formed in the extension part 41. Taper parts 43a, 44a, 45a, and 46a extending on the rear side of the vehicle body are formed in the four through-holes, respectively, so as to facilitate assembling work. The extension part 41 according to the embodiment is characterized in that a notch 49 is formed at a lateral end thereof on the rear side of the vehicle body, and a notch 48 is formed at a lateral end of an opening 42, on the front side of the vehicle body, where the wire holding part 63L of the fixation plate 60 faces.

With reference to Fig. 1 and Fig. 2, when an impact exceeding a predetermined value is applied to the motorcycle 1 from the front side of the vehicle body, the impact is likely to be transmitted to the left and right top shelters 40L and 40R which are indirectly coupled to the upper cowl 8 and the like. At this time, the airbag module 20 fixed to the frame 2 by a support stay 21 is hardly moved, and accordingly a shear stress and the like are likely to be generated between the top shelters 40L and 40R, and the top shelter center 50 arranged on the rear side of the vehicle body relative to the airbag module 20. When such a stress is generated between the both components, the top shelters 40L and 40R, and the top shelter center 50 are likely to be unpredictably deformed. However, the top shelter 40 according to the embodiment is configured in such a manner that, due to the formation of the notches 48 and 49, the top shelters 40L and 40R, and the top shelter center 50 are preferentially separated at the notches 48 and 49 when such a stress is generated, so that a stress generated by the impact is allowed to escape. By performing the target rupture, it is possible to prevent the deformation of exterior components, which is difficult to predict.

In the embodiment, the notches 48 and 49 are formed in a long shape extending in the front-rear direction of the vehicle body, and are directed toward the front side of the vehicle body. Further, the notches 48 and 49 are arranged outside in the vehicle-width direction relative to engaging portions between the through-holes 43, 44, 45, and 46, and the top shelter center 50. Accordingly, when such a stress acts on the top shelters 40L and 40R, the stress is concentrated at upper portions, in the drawing, of the notches 48 and 49 to cause vertical rupture, so that the both are separated.

It is obvious that the shapes of the openings formed in the extension parts, and the number, arrangements and shapes of notches formed in the extension parts and the openings are variously modified without being limited to the above-described embodiment. For example, thin portions or a plurality of through-holes may be formed in the vicinities of the notches in order to determine target rupture lines.

The invention is directed to an airbag system for a motorcycle in which predetermined components are ruptured as planned so as to prevent unpredictable deformation of exterior components.

In an airbag system including accommodation parts 47 in which support belts 15 for coupling an airbag 14 to a vehicle body are accommodated and belt covers 30 which cover above the accommodation parts: a top shelter center 50 which is arranged on the rear side of the vehicle body while being adjacent to an airbag module 20 in which the airbag 14 is accommodated, and a pair of left and right top shelters 40L and 40R which are engaged with the top shelter center 50 outside in the vehicle-width direction are provided; the accommodation parts 47 are configured by overhanging parts 51 of the top shelter center 50 which are overhung outside in the vehicle-width direction and extension parts 51 of the top shelters 40L and 40R which extend inside in the vehicle-width direction; the both components are engaged with each other through engaging portions in the accommodation parts 47; and notches 48 and 49 formed along the front-rear direction of the vehicle body are provided in the extension parts 41 outside in the vehicle-width direction relative to the engaging portions.

## Claims

1. An airbag system for a motorcycle, including an accommodation part (47) in which a support belt (15) for coupling an airbag (14) to a vehicle body is accommodated and a cover (30L) which covers above the accommodation part (47), the system comprising:
a top shelter center (50) made of resin, as an exterior component, which is arranged on the rear side of a vehicle body while being adjacent to an airbag module (20) in which the airbag (14) is accommodated; and
top shelters made of resin, as a pair of left and right exterior components, which are engaged with the top shelter center (50) outside in the vehicle-width direction,
wherein: the accommodation part (47) is configured by an overhanging part (51) of the top shelter center (50) which is overhung outside in the vehicle-width direction and an extension part (41) of the top shelter which extends inside in the vehicle-width direction,
the overhanging part (51) is engaged with the extension part (41) through an engaging portion inside the accommodation part (47), and
a notch (48, 49) formed along the front-rear direction of the vehicle body is provided in the extension part (41) outside in the vehicle-width direction relative to the engaging portion.

2. The airbag system for a motorcycle according to Claim 1,
wherein: the cover (30L) is configured to be removed from the accommodation part (47) along with swelling and expansion of the airbag (14);
a plate having a wire holding part to which a wire (70) connected to the cover (30L) is coupled is provided;
an opening (42) where the wire holding part face outside in the vehicle-width direction is formed in the extension part (41) of the top shelter; and
the notch (48, 49) is formed at a lateral end of the corresponding extension part (41) on the rear side of the vehicle body and a lateral end of the corresponding opening (42) on the front side of the vehicle body.

## Patentansprüche

1. Airbagsystem für ein Kraftrad, enthaltend ein Aufnahmeteil (47), in dem ein Stützband (15) zum Koppeln eines Airbags (14) mit einem Fahrzeugkörper aufgenommen ist, sowie einen Deckel (30L), der das Aufnahmeteil (47) oben abdeckt, wobei das System umfasst:
ein aus Harz hergestelltes oberes Abdeckungsmittelteil (50) als externe Komponente, das an der Rückseite des Fahrzeugkörpers angeordnet ist, während es einem Airbagmodul (20) benachbart ist, in dem der Airbag (14) aufgenommen ist; und
aus Harz hergestellte obere Abdeckungen als Paar linker und rechter externer Komponenten, die in der Fahrzeugbreitenrichtung außen mit dem oberen Abdeckungsmittelteil (50) in Eingriff stehen,
worin: das Aufnahmeteil (47) durch ein überhängendes Teil (51) des oberen Abdeckungsmittelteils (50), das in der Fahrzeugbreitenrichtung nach außen überhängt, sowie ein Verlängerungsteil (41) der oberen Abdeckung, das sich in der Fahrzeugbreitenrichtung nach innen erstreckt, konfiguriert ist,
wobei das überhängende Teil (51) mit dem Verlängerungsteil (41) durch einen Eingriffsabschnitt innerhalb des Aufnahmeteils (47) in Eingriff steht, und
eine Kerbe (48, 49), die entlang der Längsrichtung des Fahrzeugkörpers ausgebildet ist, relativ zu dem Eingriffsabschnitt in der Fahrzeugbreitenrichtung außen in dem Verlängerungsteil (41) ausgebildet ist.

2. Airbagsystem für ein Kraftrad nach Anspruch 1, worin
der Deckel (30L) so konfiguriert ist, dass er einhergehend mit dem Aufblasen und Ausdehnen des Airbags (14) von dem Aufnahmeteil (47) entfernt wird;
eine Platte vorgesehen ist, die ein Drahthalteteil aufweist, mit dem ein mit dem Deckel (30L) verbundener Draht (70) gekoppelt ist;
eine Öffnung (42), wo das Drahthalteteil in der Fahrzeugbreitenrichtung nach außen weist, in dem Verlängerungsteil (41) der oberen Abdeckung ausgebildet ist; und
die Kerbe (48, 49) an einem seitlichen Ende des entsprechenden Verlängerungsteils (41) an der Rückseite des Fahrzeugkörpers und einem seitlichen Ende der entsprechenden Öffnung (42) an der Vorderseite des Fahrzeugkörpers ausgebildet ist.

## Revendications

1. Système de coussin gonflable de sécurité pour un motocycle, incluant une partie de logement (47) dans laquelle une courroie de support (15) pour coupler un coussin gonflable de sécurité (14) à une carrosserie de véhicule est logée, et un couvercle (30L) qui couvre par le dessus la partie de logement (47), le système comprenant :
un centre de protection supérieure (50) fabriquée en résine, sous la forme d'un composant extérieur, qui est agencé sur le côté arrière d'une carrosserie de véhicule tout en étant adjacent à un module de coussin gonflable de sécurité (20) dans lequel le coussin gonflable de sécurité (14) est logé ; et
des protections supérieures fabriquées en résine, sous la forme d'une paire de composants extérieurs gauche et droit, qui sont engagés avec le centre de protection supérieure (50), à l'extérieur suivant la direction de la largeur du véhicule,
dans lequel : la partie de logement (47) est configurée par une partie en porte-à-faux (51) du centre de protection supérieure (50) qui est en porte-à-faux à l'extérieur suivant la direction de la largeur du véhicule, et une partie d'extension (41) sur la protection supérieure qui s'étend à l'intérieur suivant la direction de la largeur du véhicule,
la partie en porte-à-faux (51) est engagée avec la partie d'extension (41) par l'intermédiaire d'une partie d'engagement à l'intérieur de la partie de logement (47), et
une rainure (48, 49) formée le long de la direction avant-arrière de la carrosserie de véhicule est ménagée dans la partie d'extension (41), à l'extérieur suivant la direction de la largeur du véhicule par rapport à la partie d'engagement.

2. Système de coussin gonflable de sécurité pour un motocycle selon la revendication 1,
dans lequel : le couvercle (30L) est configuré pour être retiré de la partie de logement (47) conjointement avec le gonflement et la dilatation du coussin gonflable de sécurité (14) ;
une plaque, qui comporte une partie de maintien de câble à laquelle un câble (70) raccordé au couvercle (30L) est couplé, est disposée ;
une ouverture (42) où la partie de maintien de câble fait face à l'extérieur suivant la direction de la largeur du véhicule est formée dans la partie d'extension (41) de la protection supérieure ; et
la rainure (48, 49) est formée à une extrémité latérale de la partie d'extension correspondante (41) sur le côté arrière de la carrosserie de véhicule et une extrémité latérale de l'ouverture correspondante (42) sur le côté avant de la carrosserie de véhicule.
